Europäisches Patentamt

European Patent Office

Office européen des brevets

(11) Veröffentlichungsnummer: **0 165 593**
A2

(12) **EUROPÄISCHE PATENTANMELDUNG**

(21) Anmeldenummer: **85107532.5**

(51) Int. Cl.⁴: **B 60 N 1/06**

(22) Anmeldetag: **18.06.85**

(30) Priorität: **19.06.84 DE 3422697**

(43) Veröffentlichungstag der Anmeldung:
**27.12.85 Patentblatt 85/52**

(84) Benannte Vertragsstaaten:
**DE FR GB IT**

(71) Anmelder: **Böllhoff & Co, GmbH & Co KG**
**Archimedesstrasse 1-4**
**D-4800 Bielefeld 14(DE)**

(72) Erfinder: **Hauck, Peter**
**Traubenstrasse 4**
**D-4803 Steinhagen(DE)**

(74) Vertreter: **Wehnert, Werner et al,**
**Patentanwälte Dipl.-Ing. Hauck, Dipl.-Phys. Schmitz,**
**Dipl.-Ing. Graalfs, Dipl.-Ing. Wehnert, Dipl.-Phys.**
**Carstens, Dr.-Ing. Döring Mozartstrasse 23**
**D-8000 München 2(DE)**

(54) **Rastvorrichtung für Kopfstützenhalterung.**

(57) Es wird eine Rastvorrichtung zum axialen Festlegen einer Führungsstange in einem Führungsrohr für eine verstellbare Kopfstütze beschrieben. Die Rastvorrichtung besteht aus einem Sperrschieber mit einem Bügel, der in der Raststellung in eine Kerbe der Führungsstange gedrückt wird. Am Sperrschieber sind zwei Federarme einstückig angeformt, die divergierend nach außen verlaufen und mit ihren freien Enden an konvergierend verlaufenden Gleitflächen der Führungsstange so anliegen, daß die Federarme bei einer Bewegung des Sperrschiebers in Freigaberichtung zunehmend gespannt werden, um einen Federdruck zu erzeugen, durch den Sperrschieber in seine Raststellung gedrückt wird.

FIG.2

EP 0 165 593 A2

# Beschreibung:

Die Erfindung betrifft eine Rastvorrichtung zum axialen Festlegen einer Führungsstange in einem Führungsrohr für eine verstellbare Kopfstütze, mit einem im Führungsrohr quer verschiebbar und axial unbeweglich gelagerten Sperrschieber, der durch Federdruck in eine Raststellung gedrückt wird, in der ein am Sperrschieber vorgesehener Bügel in eine Kerbe der Führungsstange greift, und der durch manuelle Betätigung in eine Freigabestellung bewegbar ist, in der der Bügel außer Eingriff mit der Kerbe der Führungsstange gelangt.

Bei vorbekannten Rastvorrichtungen dieser Art wird der Federdruck, durch den der Sperrschieber in seine Raststellung gedrückt wird, durch zwei Schrauben-Druckfedern oder durch eine Stahlspange erzeugt, die in dem Führungsrohr gelagert sind und am Sperrschieber in Rückstellrichtung angreifen. Die Verwendung derartiger Federn stellt nicht nur einen gewissen konstruktiven, herstellungs- und montagemäßigen Aufwand dar, sondern führt auch zu einer die Lebensdauer beeinträchtigenden Störanfälligkeit der Rastvorrichtung.

Der Erfindung liegt die Aufgabe zugrunde, eine Rastvorrichtung der eingangs angegebenen Gattung so weiterzubilden, daß bei Verringerung des Herstellungsaufwandes die Störanfälligkeit der Rastvorrichtung verringert wird.

Diese Aufgabe wird bei einer Rastvorrichtung mit den eingangs angegebenen Merkmalen erfindungsgemäß dadurch gelöst, daß vom Sperrschieber zwei Federarme abstehen, die mit ihren Außenenden an Gleitflächen des Führungsrohres so anliegen, daß die Federarme bei einer Bewegung des Sperrschiebers in Freigaberichtung zunehmend gespannt werden, um den Federdruck zu erzeugen, durch den der Sperrschieber in seine Raststellung gedrückt wird.

Da die Federarme Teil des Sperrschiebers bilden, sind keine gesonderten Federn zur Erzeugung des Rückstell-Federdrucks erforderlich. Dies verringert den Herstellungsaufwand und vereinfacht die Montage. Die Gefahr einer Zerstörung der Federarme ist wesentlich geringer als bei Verwendung gesonderter Drahtfedern, so daß durch die Erfindung auch die Störanfälligkeit herabgesetzt wird.

Vorzugsweise sind die Federarme am Sperrschieber einstückig angeformt, so daß der Sperrschieber gemeinsam mit den Federarmen in einem Arbeitsgang - zweckmäßigerweise aus Kunststoff - gegossen werden kann.

Trotz konstruktiver Einfachheit zeichnet sich die erfindungsgemäß ausgebildete Rastvorrichtung durch hohe Funktionssicherheit und leichte Bedienbarkeit aus.

Vorteilhafte Ausgestaltungen der Erfindung sind in den Unteransprüchen angegeben.

Anhand der Zeichnung wird ein Ausführungsbeispiel der Erfindung erläutert. Es zeigt:

Fig. 1    einen Längsschnitt durch den Kopf einer Führungsstange entlang der Linie I-I in Fig. 2;

Fig. 2    einen Querschnitt durch den Kopf der Führungsstange mit Sperrschieber entlang der Linie II-II in Fig. 1;

Fig. 3    einen Querschnitt durch den Kopf der Führungsstange entlang der Linie III-III in Fig. 2 mit einem Teil der zugehörigen Führungsstange.

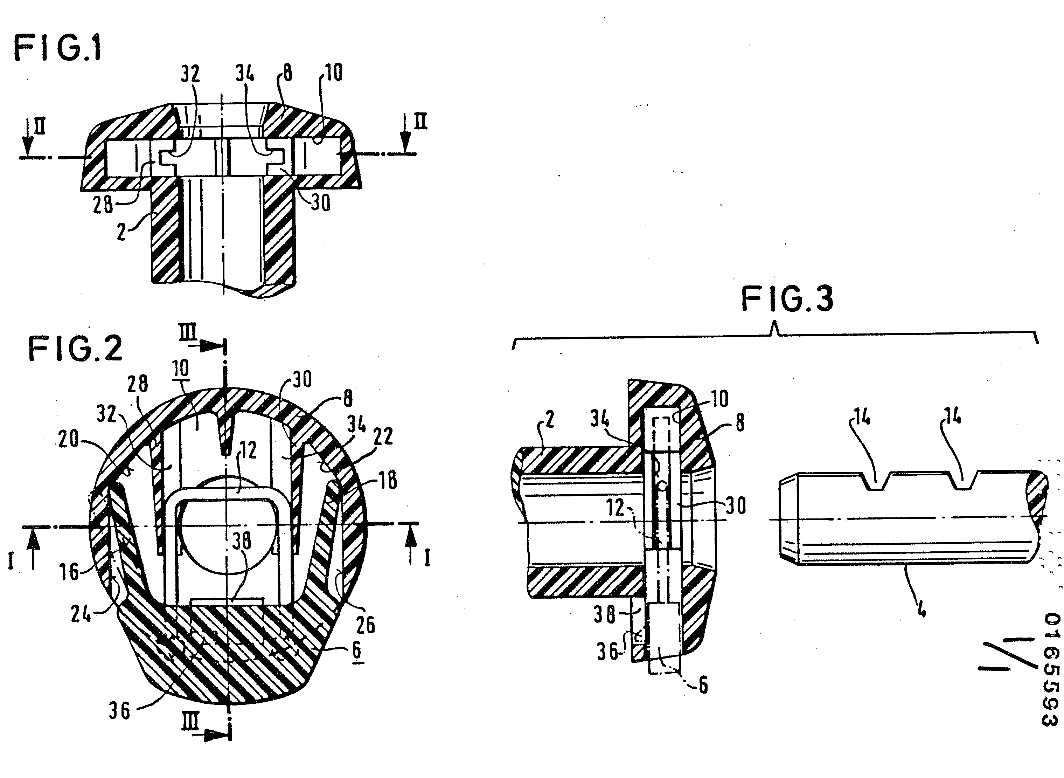

In den Figuren ist ein Führungsrohr 2 gezeigt, in das eine Führungsstange 4 (vgl. Fig. 3) für eine verstellbare Kopfstütze (nicht gezeigt) einführbar ist. Die Führungsstange 4 kann durch eine zu beschreibende Rastvorrichtung in unterschiedlichen axialen Stellungen im Führungsrohr 2 festgelegt werden.

Die Rastvorrichtung weist einen Sperrschieber 6 (Fig. 2) auf, der in einer in einem Kopf 8 des Führungsrohres 2 gebildeten Ausnehmung 10 quer verschiebbar, jedoch axial unbeweglich gelagert ist. Der Sperrschieber 6 ist mit einem U-förmigen Bügel 12 versehen, der in einer Raststellung des Sperrschiebers 6 mit seinem quer verlaufenden Steg in eine von mehreren Kerben 14 der Führungsstange 4 greift.

Der Sperrschieber 6 und damit der Bügel 14 werden durch Federdruck in ihre Raststellung gedrückt. Zu diesem Zweck sind am Sperrschieber 6 zwei Federarme 16,18 angeformt, die in das Innere der Ausnehmung 10 ragen und vom Sperrschieber 6 aus divergierend auswärts verlaufen.

Wie aus Fig. 2 hervorgeht, liegen die äußeren Enden der beiden Federarme 16,18 an Gleitflächen 20,22 an, die am Innenumfang der Ausnehmung 10 des Kopfes 8 gebildet sind. Die konvergierend verlaufenden Gleitflächen 20,22 gehen an ihren dem Sperrschieber 6 zugewandten Enden in Flächen 24,26 über, die parallel zueinander sowie parallel zur Bewegungsrichtung des Sperrschiebers 6 verlaufen. Der Abstand der beiden Flächen 26,28 voneinander ist kleiner als der Abstand der beiden freien Enden der Federarme 16,18 im ungespannten Zustand, wie durch strichpunktierte Linien in Fig. 2 angedeutet ist. Wenn somit der Sperrschieber 18 in die Ausnehmung 10 unter Anlage an den parallelen Flächen 24,26 eingeführt wird, werden die Federarme 16,18 etwas vorgespannt.

Die Gleitflächen 20,22 sind an ihren vom Sperrschieber 6 abgewandten Enden von zwei Rippen 28,30 begrenzt, die vom Innenumfang des Kopfes 8 parallel zur Bewegungsrichtung des Sperrschiebers 6 nach innen ragen. Die Rippen 28,30 sind auf ihren einander zugewandten Seiten mit je einer Nut 32 bzw. 34 versehen, die zur Führung der beiden Schenkel des U-förmigen Bügels 12 dienen.

Wie in Fig. 2 durch gestrichelte Linien angedeutet, ist der Sperrschieber 6 auf seiner Unterseite mit einem Vorsprung 36 versehen, der in eine rechteckige Ausnehmung 38 des Führungsrohres 2 greift. Durch Zusammenwirken des Vorsprungs 36 mit der Ausnehmung 38 wird ein Herausfallen des Sperrschiebers 6 aus der Ausnehmung 10 für den Fall verhindert, daß die Führungsstange 4 nicht in das Führungsrohr 2 eingesetzt ist. Die Ausnehmung 38 ist andererseits so bemessen, daß der Sperrschieber 6 zum Ausüben seiner Rast- und Freigabefunktion ausreichend bewegbar ist.

Der Sperrschieber 6 mit den daran angeformten Federarmen 18 besteht zweckmäßigerweise aus einem gegossenen Kunststoff, während der Bügel 12 aus Metalldraht hergestellt wird. Der Bügel 12 wird bei der Herstellung des Sperrschiebers 6 in das Material des Sperrschiebers eingegossen. Auch das Führungsrohr 2 und die Führungsstange 4 bestehen zweckmäßigerweise aus Kunststoff.

Die Funktionsweise der beschriebenen Rastvorrichtung ist wie folgt. Zum Zwecke des Zusammenbaus werden die Federarme 16,18 leicht zusammengedrückt, so daß der Sperrschieber 6 in die Ausnehmung 10 eingeschoben werden kann. Hierbei gleiten die Enden der Federarme 16,18 an den parallel verlaufenden Flächen 24,26, bis sie an den Gleitflächen 20,22 anliegen. Die beiden Schenkel des U-förmigen Bügels 12 gleiten hierbei in den Nuten 32,34. Der Vorsprung 36 steht dann in die Ausnehmung 38 vor, so daß der Sperrschieber 6 in der Ausnehmung 10 gehalten ist. Die Rastvorrichtung ist nun betriebsbereit.

Um die Führungsstange mit der daran befestigten Kopfstütze (nicht gezeigt) in das Führungsrohr 2 einführen zu können, wird der Sperrschieber 6 durch Fingerdruck radial nach innen gedrückt, so daß der Quersteg des Bügels 12 aus den Bereich der Bohrung der Führungsstange 2 gelangt. Hierbei gleiten die äußeren Enden der Federarme 16,18 an den Gleitflächen 20,22 entlang, wodurch sie zunehmend verformt und dadurch gespannt werden.

Ist der Sperrschieber 6 bis zum Anschlag nach innen geschoben, kann die Führungsstange 4 in das Führungsrohr 2 eingeführt werden. Befindet sich eine der Kerben 14 der Führungsstange 4 gegenüber dem Bügel 12, so kann sich der Sperrschieber 6 in seine Raststellung bewegen. Zu diesem Zweck wird der Sperrschieber 6 vom Fingerdruck befreit, so daß nun die beiden Federarme 16,18 aufgrund ihrer Vorspannung an den Gleitflächen 20,22 entlanggleiten und hierbei den Sperrschieber 6 radial auswärts bewegen, bis der Quersteg des Bügels 12 in die entsprechende Kerbe 14 der Führungsstange 4 greift. Die Führungsstange 4 ist damit axial festgelegt.

Zum Verstellen der Führungsstange 4 muß der Sperrschieber 6 durch Fingerdruck wieder in seine Freigabestellung bewegt werden, wie aus der bisherigen Funktionsbeschreibung ohne weiteres hervorgehen dürfte.

Im dargestellten Ausführungsbeispiel sind die schräg zur Bewegungsrichtung des Sperrschiebers 6 verlaufenden Gleitflächen 20,22 geradlinig ausgebildet. Sie könnten jedoch auch gekrümmt, z.B. kreissektorförmig, ausgebildet sein.

Patentansprüche:

1. Rastvorrichtung zum axialen Festlegen einer Führungsstange in einem Führungsrohr für eine verstellbare Kopfstütze, mit einem im Führungsrohr quer verschiebbar und axial unbeweglich gelagerten Sperrschieber, der durch Federdruck in eine Raststellung gedrückt wird, in der ein am Sperrschieber vorgesehener Bügel in eine Kerbe der Führungsstange greift, und der durch manuelle Betätigung in eine Freigabestellung bewegbar ist, in der der Bügel außer Eingriff mit der Kerbe der Führungsstange gelangt, dadurch gekennzeichnet, daß vom Sperrschieber (6) zwei Federarme (16,18) abstehen, die mit ihren Außenenden an Gleitflächen (20,22) des Führungsrohres (2) so anliegen, daß die Federarme (16, 18) bei einer Bewegung des Sperrschiebers (6) in Freigaberichtung zunehmend gespannt werden, um den Federdruck zu erzeugen, durch den der Sperrschieber (6) in seine Raststellung gedrückt wird.

2. Rastvorrichtung nach Anspruch 1, dadurch gekennzeichnet, daß, in Freigaberichtung gesehen, die beiden Federarme (16,18) divergierend und die Gleitflächen (20,22) konvergierend verlaufen.

3. Rastvorrichtung nach Anspruch 1 oder 2, dadurch gekennzeichnet, daß die Federarme (20,22) am Sperrschieber (6) einstückig angeformt sind.

4. Rastvorrichtung nach einem der vorhergesehenden Ansprüche, dadurch gekennzeichnet, daß die Gleitflächen (20, 22) am Innenumfang eines am Führungsrohr (2) angeformten Kopfes (8) gebildet sind.

5. Rastvorrichtung nach Anspruch 4, dadurch gekennzeichnet, daß die Gleitflächen (20,22) mit ihren vom Sperrschieber (6) abgewandten Enden an ins Innere des Führungsrohres (2) ragenden Rippen (28,30) enden, die zur Führung des Bügels (12) dienen.

6. Rastvorrichtung nach Anspruch 4 oder 5, dadurch gekennzeichnet, daß die Gleitflächen (20,22) mit ihren dem Sperrschieber (6) zugewandten Enden an zum Einführen des Sperrschiebers (6) dienenden Flächen (24,26) angrenzen, die parallel zur Bewegungsrichtung des Sperrschiebers (6) verlaufen und deren Abstand voneinander kleiner ist als der Abstand der Enden der beiden Federarme (20,22) im ungespannten Zustand.

7. Rastvorrichtung nach einem der vorhergehenden Ansprüche, dadurch gekennzeichnet, daß der Sperrschieber (6) mit einem Vorsprung (36) versehen ist, der in eine Ausnehmung (38) des Führungsrohres (2) greift, um ein Herausfallen des Sperrschiebers (6) aus dem Führungsrohr (2) bei nicht eingesteckter Führungsstange (4) zu verhindern.

8. Rastvorrichtung nach einem der vorhergehenden Ansprüche, dadurch gekennzeichnet, daß der Sperrschieber (6) aus Kunststoff und der Bügel (12) aus Draht besteht, wobei der Bügel (12) in den Sperrschieber (6) eingegossen ist.

9. Rastvorrichtung nach einem der vorhergehenden Ansprüche, dadurch gekennzeichnet, daß die Gleitflächen (20,22) geradlinig oder gekrümmt ausgebildet sind.

10. Rastvorrichtung nach einem der vorhergehenden Ansprüche, dadurch gekennzeichnet, daß die Gleitflächen (20,22) zur Bewegungsrichtung des Sperrschiebers (6) geneigt verlaufen.

FIG.1

FIG.2

FIG.3

0165593

1/1